# EUROPÄISCHE PATENTSCHRIFT

(11) **EP 3 275 597 B1**
(45) Veröffentlichungstag und Bekanntmachung des Hinweises auf die Patenterteilung: **08.09.2021**
(21) Anmeldenummer: 17182895.7
(22) Anmeldetag: 25.07.2017
(51) Int. Cl.: B25B 27/06

(54) **WERKZEUG UND VERFAHREN ZUM EIN- UND AUSZIEHEN VON BAUTEILEN**
TOOL AND METHOD FOR TIGHTENING AND LOOSENING COMPONENTS
OUTIL ET PROCÉDÉ DE MONTAGE ET DÉMONTAGE DE COMPOSANTS

(30) Priorität: 27.07.2016 DE 102016213811
(43) Veröffentlichungstag der Anmeldung: 31.01.2018
(73) Patentinhaber: Müller, Michael, 96231 Staffelstein (DE)
(72) Erfinder: Müller, Michael, 96231 Staffelstein (DE)
(74) Vertreter: Isarpatent

(56) Entgegenhaltungen:
- EP-A2- 1 837 127
- DE-U1-202006 014 102
- GB-A- 2 064 411
- US-A- 3 327 377
- US-A1- 2008 313 888

## Beschreibung

Die vorliegende Erfindung betrifft ein Werkzeug und ein Verfahren zum Ein- und Ausziehen von Bauteilen, insbesondere Lagern, Buchsen und dergleichen, insbesondere im Kraftfahrzeugbereich, in eine Bauteilaufnahme hinein oder aus dieser heraus.

Im Kraftfahrzeugbereich müssen zu Reparaturzwecken Bauteile, wie Lager, z.B. Kugellager, Silentlager oder dergleichen, verschleißbedingt von Zeit zu Zeit ausgetauscht werden. Hierzu ist es notwendig, die Bauteile aus einer Bauteilaufnahme, insbesondere in Form einer Bohrung, herauszuziehen oder in diese hinein zu bewegen.

Da insbesondere im Kraftfahrzeugbereich bzw. allgemein im Maschinenbau eine Vielzahl unterschiedlicher Lagertypen und Buchsentypen verwendet wird, ist eine Vielzahl von zumeist individuell an den jeweiligen Lagertyp angepassten Werkzeugen notwendig.

Die DE 34 43 249 C2 offenbart ein Werkzeug zum Ein- und Ausziehen von Lagern, in Lageraufnahmen hinein oder aus diesen heraus, bei dem eine auf einer Spindel angeordnete erste Druckscheibe von einer ersten Seite her gegen das Lager drückt und eine ebenfalls auf der Spindel sitzende zweite Druckscheibe von einer gegenüberliegenden zweiten Seite her an der Lageraufnahme anliegt. Zur Festlegung der Position des Werkzeugs gegenüber dem Lager ist eine Außenkontour der ersten Druckscheibe komplementär an einen Anlagebereich der Innenkontour des Lagers angepasst. Das Aus- oder Einziehen des Lagers erfolgt durch ein Bewegen der Druckscheiben relativ zueinander. Dabei stützt sich die zweite Spindel an der Lageraufnahme ab. Weitere Werkzeuge sind aus DE202006014102U1 und GB2064411 bekannt.

Es ist Aufgabe der vorliegenden Erfindung ein Werkzeug sowie ein Verfahren zum Ein- und Ausziehen von Bauteilen, insbesondere Lagern, Buchsen und dergleichen bereitzustellen, mit denen verschiedene Typen von Bauteilen in verbesserter Weise montierbar und demontierbar sind.

Diese Aufgabe wird erfindungsgemäß jeweils durch die Gegenstände der entsprechenden unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Werkzeug gemäß Anspruch 1 vorgesehen.

Demgemäß ist ein Werkzeug mit einer länglichen Spindel vorgesehen, auf welche ein erster Hülsenkörper und ein zweiter Hülsenkörper aufsteckbar oder aufschiebbar ist. Die Spindel weist eine Spindellängsachse auf, welche die axiale Richtung definiert. Insbesondere ist die Spindel durch die Hülsenkörper hindurchführbar. Die Hülsenkörper sind jeweils mittels eines dem jeweiligen Hülsenkörper zugeordneten Druckkörpers mit einer axialen Kraft beaufschlagbar.

Die Hülsenkörper weisen jeweils rampenförmig verlaufende Außenumfangsflächen auf. Die erste rampenförmigen Außenumfangsfläche bildet eine Rotationsfläche um eine erste Hülsenmittelachse. Die zweite rampenförmigeAußenumfangsfläche bildet ein Rotationsfläche um eine zweite Hülsenmittelachse. In einem Zustand, in dem die Hülsenkörper auf die Spindel aufgeschoben sind, erstrecken die Spindellängsachse, die erste Hülsenmittelachse und die zweite Hülsenmittelachse entlang einander bzw. sind in etwa identisch.

Weiterhin können die Druckkörper jeweils derart auf der Spindel angeordnet werden, dass der erste und der zweite Hülsenkörper beide zwischen dem ersten und dem zweiten Druckkörper angeordnet sind. Dieser Zustand kann als zusammengesetzter Zustand des Werkzeugs bezeichnet werden.

Erfindungsgemäß sind der erste und der zweite Hülsenkörper jeweils derart vorsehbar, dass die zweite rampenförmige Außenumfangsfläche der ersten rampenförmigen Außenumfangsfläche zugewandt ist. In dem zusammengesetzten Zustand des Werkzeugs können die Hülsenkörper somit insbesondere derart auf der Spindel angeordnet sein, dass sich der durch die Außenumfangsflächen definierte Außendurchmesser der Hülsenkörper aufgrund dessen rampenförmiger Gestalt zu einem Bereich hin, welcher in axialer Richtung zwischen den Hülsenkörpern gelegen ist, entlang der Spindellängsachse verringert.

Die rampenförmigen Außenumfangsflächen verjüngen sich jeweils entlang der jeweiligen Hülsenmittelachse und können daher vorteilhaft von entgegengesetzten Seiten her teilweise in eine Innenbohrung eines Bauteils eingeführt werden. Hierbei erfolgt eine im Wesentlichen spielfreie Anlage der Außenumfangsflächen an das Bauteil. Weiterhin zentriert sich der jeweilige Hülsenkörper aufgrund des rampenförmigen Verlaufs der Außenumfangsfläche bezüglich der Längsachse der Innenbohrung des Bauteils von selbst. Wird die Spindel durch die Bohrungen der Hülsenkörper sowie durch die des Bauteils hindurchgeführt, ist auch die Spindel mit sehr hoher Genauigkeit bezüglich der Längsachse der Innenbohrung des Bauteils zentriert. Damit wird ein Verklemmen des Bauteils in der Bauteilaufnahme beim Aus- oder Einziehen mit größter Zuverlässigkeit verhindert. Auch ist das Werkzeug durch die spielfreie Selbstzentrierung besonders schnell an ein ein- oder auszuziehendes Bauteil positionierbar. Weiterhin ist die Positioniergenauigkeit des Werkzeugs verbessert, da kein manuelles zentrieren oder Ausrichten erforderlich ist. Durch den rampenförmigen Verlauf der Außenumfangsflächen können darüber hinaus ein und dieselben Hülsenkörper für eine Vielzahl von Bohrungsdurchmessern verwendet werden. Dies vergrößert den Einsatzbereich des Werkzeugs erheblich.

Das Bauteil ist insbesondere zwischen den rampenförmigen Außenumfangsflächen der Hülsenkörper einklemmbar. Damit wird eine besonders zuverlässige Fixierung des Bauteils am Werkzeug erzielt. Weiterhin muss keines der Hülsenteile an der Bauteilaufnahme abgestützt werden. Dies ist insbesondere in räumlich engen Montagebereichen des Bauteils vorteilhaft und ein Verklemmen des Bauteils in der Bauteilaufnahme wird verhindert.

Der erste und der zweite Hülsenkörper können insbesondere gleich oder unterschiedlich gestaltet sein. Beispielsweise können die erste und die zweite Außenumfangsfläche gleiche oder unterschiedliche Rampengestaltungen aufweisen bzw. ausbilden. Ein durch ein axiales Ende derjeweiligen Außenumfangsfläche definierter maximaler Außendurchmesser der Hülsenkörper kann weiterhin für den ersten und den zweiten Hülsenkörper gleich oder verschieden sein. Gemäß einer bevorzugten Ausführungsform weisen der erste Hülsenkörper und der zweite Hülsenkörper verschieden Außendurchmesser bei gleicher Gestaltung des rampenförmigen Verlaufs derjeweiligen Außenumfangsfläche auf.

Bevorzugt ist vorgesehen, dass die erste rampenförmige Außenumfangsfläche und/oder die zweite rampenförmige Außenumfangsfläche konisch ausgebildet ist. Bei einem konischen Verlauf der rampenförmigen Außenumfangsfläche schließt diese mit der Hülsenmittelachse einen Konuswinkel ein. Falls sowohl der erste als auch der zweite Hülsenkörper mit konischen Außenumfangsflächen ausgebildet sind, weisen diese bevorzugt gleiche Konuswinkel bei verschiedenen Außendurchmessern auf. Es kann jedoch auch vorgesehen sein, dass die Außenumfangsflächen verschiedene Konuswinkel aufweisen. Eine konische Gestaltung des rampenförmigen Verlaufs der Außenumfangsfläche bietet den Vorteil, dass diese bei einfachem konstruktiven Aufbau eine äußerst zuverlässige Zentrierung des Hülsenkörpers bewirkt.

Insbesondere kann die erste rampenförmige Außenumfangsfläche und/oder die zweite rampenförmige Außenumfangsfläche mit einer konvexen Krümmung ausgebildet sein. Falls sowohl der erste als auch der zweite Hülsenkörper mit konvexen Außenumfangsflächen ausgebildet sind, weisen diese bevorzugt gleiche Krümmungsradien bzw. Krümmungsverläufe bei verschiedenen Außendurchmessern auf. Es kann jedoch auch vorgesehen sein, dass die Außenumfangsflächen verschiedene Krümmungsverläufe aufweisen. Eine konvexe Gestaltung des rampenförmigen Verlaufs der Außenumfangsfläche bietet durch dessen Aufbauchung in radialer Richtung den Vorteil, dass die Hülsenkörper in axialer Richtung zwar in das Bauteil einführbar sind und sich durch die Rampengestaltung der Außenumfangsflächen selbst zentrieren und anlegen. Jedoch ragen die Hülsenkörper nicht sehr weit in axialer Richtung in das Bauteil hinein. Damit können auch Bauteile, welche nur eine geringe axiale Erstreckung aufweisen zuverlässig und sicher zwischen den Hülsenkörpern geklemmt werden.

Vorteilhaft kann auch vorgesehen sein, dass die erste rampenförmige Außenumfangsfläche und/oder die zweite rampenförmige Außenumfangsfläche mit einer konkaven Krümmung ausgebildet ist. Falls sowohl der erste als auch der zweite Hülsenkörper mit konvexen Außenumfangsflächen ausgebildet sind, weisen diese bevorzugt gleiche Krümmungsradien bzw. Krümmungsverläufe bei verschiedenen Außendurchmessern auf. Es kann jedoch auch vorgesehen sein, dass die Außenumfangsflächen verschiedene Krümmungsverläufe aufweisen. Die konkave Gestaltung der Außenumfangsflächen erlaubt eine besonders einfaches Einführen der Hülsenkörper in eine Innenbohrung des Bauteils. Dies ist insbesondere bei Bauteilen mit engen Innenbohrungen vorteilhaft.

Generell können in dem Werkzeug die verschiedenen Gestaltungen des rampenförmigen Verlaufs der Außenumfangsflächen vorteilhaft miteinander kombiniert werden. Beispielsweise kann der erste Hülsenkörper eine konische erste Außenumfangsfläche und der zweite Hülsenkörper eine konvex gekrümmte zweite Außenumfangsfläche aufweisen. Weitere Kombinationen sind selbstverständlich denkbar.

Bevorzugt kann vorgesehen sein, dass die Spindel ein Außengewinde aufweist. Die Spindel kann demnach insbesondere als eine Gewindespindel ausgebildet sein. Dies bietet den Vorteil, dass zusätzliche Funktionskomponenten einfach an der Spindel fixierbar sind.

Vorteilhaft können die Druckkörper als Druckmuttern ausgeführt sein. Die Druckkörper können demnach als hülsenförmige Körper mit einem Innengewinde ausgeführt sein. Damit können die Druckkörper vorteilhaft auf die Spindel aufgeschraubt werden. Insbesondere kann die Positionierung der Druckkörper relativ zueinander auf der Spindel durch einfaches Drehen des jeweiligen Druckkörpers vorteilhaft verändert werden.

Generell kann vorgesehen sein, dass die Druckkörper eine hutförmige Gestalt aufweisen. Die Druckkörper können somit als hülsenförmige Körper ausgebildet sein. Insbesondere können der erste und der zweite Druckkörper jeweils ein Funktionsabschnitt oder Funktionsbereich und einen Bund aufweisen, wobei der Bund einen größeren Durchmesser aufweist als der Funktionsabschnitt. Der Funktonabschnitt kann insbesondere als Sechskant ausgeführt sein. Der Bund bietet den Vorteil, dass eine Anlagefläche zur Anlage an den jeweiligen Hülsenkörper vorteilhaft vergrößert ist.

Besonders bevorzugt kann vorgesehen sein, dass das Werkzeug zusätzlich ein an einen Endabschnitt der Spindel koppelbares Kopplungselement aufweist. Das Kopplungselement ist zur mechanischen Kopplung weiterer Komponenten an die Spindel vorgesehen und bildet insbesondere einen Verbinder zwischen der Spindel und einer weiteren Komponente.

Insbesondere ist das Kopplungselement lösbar mit der Spindel verbindbar. Damit wird vorteilhaft die Möglichkeit geschaffen, verschiedene Kopplungselemente für verschiedene anzukoppelnde Komponenten bereitzustellen. Dies vergrößert weiter den Einsatzbereich des Werkzeugs. Beispielsweise kann das Kopplungselement ein Innengewinde aufweisen, mit dem dieses auf die Spindel aufschraubbar ist. Es ist auch denkbar, dass das Kopplungselement einen Dorn mit einem Außengewinde aufweist, wobei der Dorn in eine am Ende der Spindel ausgebildete Bohrung mit einem Innengewinde einschraubbar ist. Auch können im Endabschnitt der Spindel und an dem Kopplungselement zusammen einen Bajonettverschluss bildende Strukturen vorgesehen sein.

Alternativ zu einem koppelbaren Kopplungselement kann vorgesehen sein, dass die Spindel ein an einem Endabschnitt einstückig mit diesem ausgebildetes Kopplungselement aufweist. Damit wird die Anzahl der lösbaren Bestandteile des Werkzeugs vorteilhaft verringert.

Erfindungsgemäß ist vorgesehen, dass das Werkzeug zusätzlich eine Schlageinrichtung mit einem an die Spindel koppelbaren Anschlagbauteil und einem gegen einen Anschlagkörper des Anschlagbauteils bewegbaren Schlagkörper aufweist. Die Schlageinrichtung kann insbesondere mittels des Kopplungselements an die Spindel koppelbar sein. Auch kann vorgesehen, dass die Schlageinrichtung selbst eine direkt mit der Spindel koppelbaren oder verbindbare Struktur, wie beispielsweise eine Bohrung mit einem Innengewinde, aufweist. Die Schlageinrichtung ist insbesondere mechanisch mit der Spindel verbindbar. Dies bedeutet, dass infolge der Kopplung eine Kraft, insbesondere eine axiale Kraft entlang der Spindellängsachse von der Schlageinrichtung auf die Spindel übertragbar ist. Damit wird mit der Schlageinrichtung eine einfache Möglichkeit zur Beaufschlagung der Spindel mit einer zum Ein- oder Ausziehen eines Bauteils in eine Aufnahme hinein oder aus dieser heraus geschaffen.

Der Anschlagkörper kann beispielsweise als eine Scheibe oder ein Block ausgeführt sein, welcher eine Oberfläche bereitstellt, gegen welche der Schlagkörper anschlagbar ist. Der Schlagkörper kann im einfachsten Fall ein Hammer sein, mit dem ein Benutzer des Werkzeugs zur Kraftbeaufschlagung der Spindel gegen den Anschlagkörper schlagen kann. Durch den Anschlagkörper wird ein Bereich zur stoßweisen Kraftaufbringung bereitgestellt. Dies bietet den Vorteil, dass große Kraftspitzen erzeugbar sind, wodurch mittels des Werkzeugs auch sehr fest sitzende Bauteile zuverlässig aus Aufnahmen entfernbar sind.

Vorteilhaft ist vorgesehen, dass das Anschlagbauteil ein Führungsstück aufweist, an welchem der Schlagkörper geführt bewegbar ist, und der Anschlagkörper mit dem Führungsstück verbindbar oder verbunden ist. Insbesondere ist damit ein längliches, z.B. stabförmiges oder schienenförmiges, Bauteil als Führungsabschnitt des Anschlagbauteils vorgesehen. Insbesondere kann das Führungsstück mit einem ersten Endabschnitt an die Spindel koppelbar sein. Der Anschlagkörper ist bevorzugt an einem entgegengesetzt zu dem ersten Endabschnitt gelegenen zweiten Endabschnitt des Führungsstücks vorgesehen. Der Anschlagkörper kann insbesondere lösbar an das Führungsstück koppelbar sein. Beispielsweise kann der Anschlagkörper an das Führungsstück anschraubbar ausgeführt sein. Alternativ hierzu können der Anschlagkörper und das Führungsstück auch fest miteinander verbunden sein, insbesondere stoffschlüssig, z.B. verschweißt, oder kraftschlüssig, z.B. mittels Presspassung. Insbesondere können das Führungsstück und der Anschlagkörper auch dadurch fest miteinander verbunden sein, dass diese einstückig ausgeführt sind.

Als Schlagkörper kann hierbei insbesondere ein Hohlzylinder oder ein blockförmiger Körper vorgesehen sein. Der Schlagkörper kann beispielsweise eine Innenbohrung aufweisen, durch welche das Führungsstück hindurchführbar ist. Auch ist denkbar, dass das Führungsstück eine sich entlang desselben erstreckende Führungsausnehmung, z.B. in Form einer Nut, aufweist, welche eine Führungsbahn ausbildet. Dementsprechend kann an dem Schlagkörper ein Führungsansatz vorgesehen sein, welcher in der Führungsbahn zur Führung des Schlagkörpers an dem Führungsstück aufnehmbar und in dieser bewegbar ist.

Bevorzugt ist vorgesehen, dass das Anschlagbauteil mittels des Kopplungselements an die Spindel koppelbar ist. Das Kopplungselement kann demnach einen Kopplungsbereich zur Kopplung an das Anschlagbauteil und gegebenenfalls einen weiteren Kopplungsbereich zur Kopplung an die Spindel aufweisen. Insbesondere kann ein erster Endabschnitt des Führungsstücks des Anschlagbauteils mit dem Kopplungselement an die Spindel gekoppelt werden.

Bevorzugt ist vorgesehen, dass das Werkzeug nach dem Baukastenprinzip eine Auswahl an sich unterscheidenden Spindeln, an sich unterscheidenden Hülsenkörpern und/oder an sich unterscheidenden Druckkörpern aufweist. Es können insbesondere mehrere Spindeln mit verschiedenen Längen und/oder mit verschiedenen Außendurchmessern und/oder verschiedenen Gewindetypen und/oder verschiedenen Gewindegrößen vorgesehen sein. Weiterhin können mehrere verschiedene Hülsenkörper mit verschiedenen Außendurchmessern und/oder verschiedenen rampenförmigen Verläufen der Außenumfangsflächen, z.B. verschiedenen Konuswinkeln, und/oder verschiedenen Gestaltungen der rampenförmigen Außenumfangsflächen, z.B. zwei Hülsenkörper mit konischen und zwei mit konvex gekrümmten Außenumfangsflächen , vorgesehen sein. Die Druckkörper können verschiedene Gestalten aufweisen, beispielsweise können verschiedene Druckmuttern mit und ohne Bund vorgesehen sein. Selbstverständlich können auch die Druckkörper mit verschiedenen Durchmessern und/oder Gewindegrößen vorliegen. Gegebenenfalls können auch mehrere verschiedene Schlageinrichtungen mit verschiedenen Typen von Schlagkörpern und/oder verschiedenen Größen von Schlagkörpern und/oder verschiedenen Führungsstücken und/oder verschiedenen Anschlagkörpern vorgesehen sein.

Das Baukastenprinzip schafft somit einen Werkzeugsatz, welcher vorteilhaft zum Ein- oder Ausziehen verschiedenster Bauteile verwendbar ist.

Nach einem weiteren Aspekt der Erfindung ist ein Verfahren gemäß Anspruch 12 vorgesehen.

Das Verfahren kann insbesondere mit dem oben beschriebenen Werkzeug durchgeführt werden.

Erfindungsgemäß werden bei dem Verfahren die Hülsenkörper von entgegengesetzten Seiten her an einer Innenbohrung des Bauteils angesetzt, die Spindel durch die Hülsenkörper und die Innenbohrung hindurchgeführt und eine Kraftbeaufschlagung der Hülsenkörper mit aufeinander zu gerichteten Kräften durch die Druckkörper herbeigeführt. Weiterhin erfolgt die Beaufschlagen der Spindel mit einer Kraft entlang der Spindellängsachse. Die rampenförmige Gestalt der Außenoberflächen der Hülsenkörper bewirkt eine Zentrierung des Werkzeugs gegenüber der Innenbohrung des Bauteils sowie eine zuverlässige Anlage an das Bauteil. Damit ist keine gesonderte Ausrichtung des Werkzeugs erforderlich, wodurch das Verfahren besonders zügig durchführbar ist. Bei der Kraftbeaufschlagung ist das Werkzeug insgesamt somit mit hoher Genauigkeit gegenüber der Innenbohrung des Bauteils zentriert. Damit wird ein Verklemmen des Bauteils in der Bauteilaufnahme infolge der axialen Kraftbeaufschlagung zuverlässig verhindert.

In Bezug auf die zeitliche Reihenfolge der Schritte des Verfahrens kann insbesondere vorgesehen sein, dass der erste Hülsenkörper und der erste Druckkörper bereits auf die Spindel aufgeschoben sind und die Spindel von einer Seite her in die Innenbohrung des Bauteils derart eingeführt wird, dass zunächst die erste rampenförmige Außenumfangsfläche mit dem ersten Randbereich der Innenbohrung in Kontakt kommt. Anschließend kann der zweite Hülsenkörper von der entgegengesetzten Seite her auf die Spindel aufgeschoben und in Kontakt mit dem zweiten Randbereich der Innenbohrung gebracht werden und die Kraftbeaufschlagung durch die Druckkörper erfolgen. Selbstverständlich kann auch ein anderer zeitlicher Ablauf vorgesehen sein. Beispielweise können die Außenumfangsflächen der Hülsenkörper auch gleichzeitig mit dem jeweiligen Randbereich der Bohrung kontaktiert werden.

Erfindungsgemäß ist vorgesehen, dass das axiale Beaufschlagen der Spindel mit einer Kraft durch stoßweises Aufbringen der Kraft infolge eines Bewegens eines Schlagkörpers gegen einen Anschlagkörper eines an die Spindel gekoppelten Anschlagbauteils erfolgt. Das Bauteil kann demgemäß insbesondere in die Aufnahme hinein oder aus dieser heraus geklopft werden. Insbesondere beim Ausziehen von Bauteilen bietet dies den Vorteil, dass durch die aufgrund der dynamischen Kraftbeaufschlagung betragsmäßig sehr hohe axiale Kräfte erzielt werden. Damit können auch sehr fest sitzende Bauteile zuverlässig und schnell aus der Aufnahme entfernt werden.
Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner oder gleich 45 Grad, bevorzugt kleiner oder gleich 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine Schnittansicht eines Werkzeugs gemäß einem Ausführungsbeispiel der vorliegenden Erfindung, wobei das Werkzeug in einem zusammengesetzten Zustand während des Ein- oder Ausziehen eines Bauteils gezeigt ist;
- Fig. 2: eine schematische Ansicht eines als Werkzeugsatz vorliegenden Werkzeugs gemäß einem bevorzugten Ausführungsbeispiel der vorliegenden Erfindung;
- Fig. 3: eine Schlageinrichtung des Werkzeugs gemäß einem weiteren Ausführungsbeispiel der vorliegenden Erfindung;
- Fig. 4: eine Schnittansicht eines Hülsenkörpers des Werkzeugs gemäß einem weiteren Ausführungsbeispiel der vorliegenden Erfindung, wobei der Hülsenkörper eine konkav verlaufende rampenförmige Außenumfangsfläche aufweist; und
- Fig. 5: eine Schnittansicht eines Hülsenkörpers des Werkzeugs gemäß einem weiteren Ausführungsbeispiel der vorliegenden Erfindung, wobei der Hülsenkörper eine konvex verlaufende rampenförmige Außenumfangsfläche aufweist

In den Figuren bezeichnen dieselben Bezugszeichen gleiche oder funktionsgleiche Komponenten, soweit nichts Gegenteiliges angegeben ist.

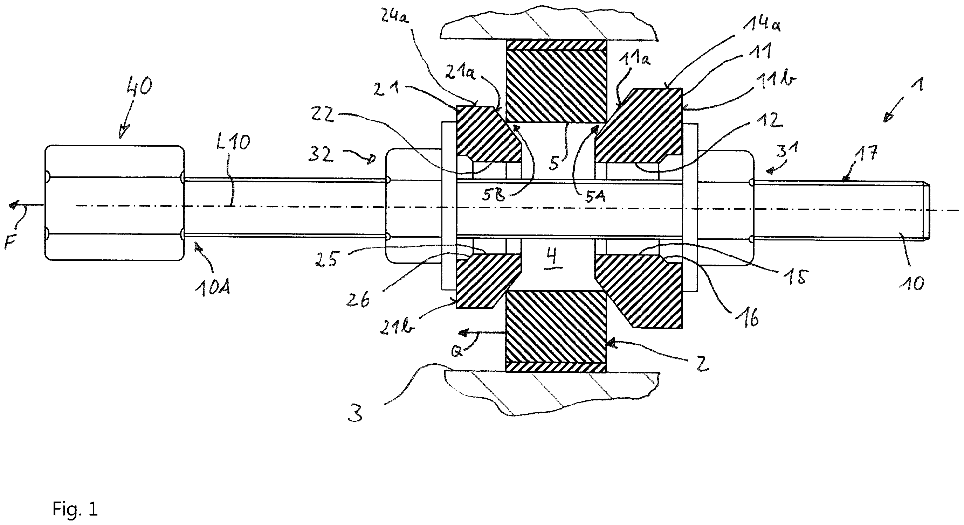

Fig. 1 zeigt beispielhaft ein Werkzeug 1 gemäß einem Ausführungsbeispiel der vorliegenden Erfindung in einem zusammengesetzten Zustand während einem Einoder Ausziehen eins Bauteils 2 aus einer Bauteilaufnahme 3. Das Bauteil 2 kann insbesondere durch ein Lager gebildet sein, wie schematisch in Fig. 1 gezeigt ist. Insbesondere kann es sich bei dem Bauteil 2 um ein Radlager eines Kraftfahrzeugs handeln. Das Bauteil 2 kann jedoch generell durch ein Lager, ein Dichtelement, ein Buchse oder dergleichen ausgebildet sein, wie beispielsweise Silentlager, Hydrolager, Kugellager, Simmerringe, Gummilager oder dergleichen.

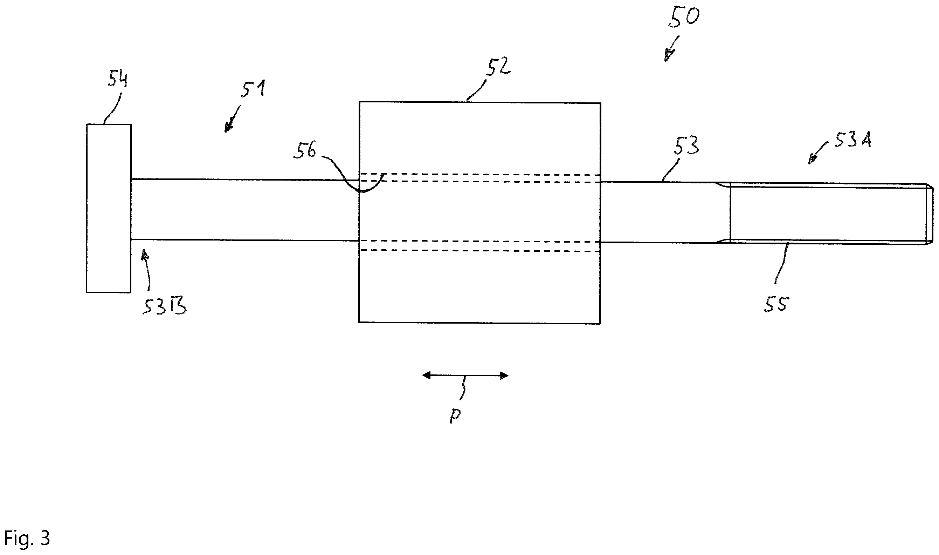

Das Werkzeug 1 ist zum Ein- oder Ausziehen des Bauteils 2 in die Bauteilaufnahme 3 hinein oder aus dieser heraus vorgesehen und weist eine Spindel 10, einen ersten Hülsenkörper 11, einen zweiten Hülsenkörper 21, einen ersten Druckkörper 31 und einen zweiten Druckkörper 32 auf. Optional kann das Werkzeug weiterhin eine Kopplungselement 40 aufweisen. Ebenfalls optional kann das Werkzeug 1 zusätzlich eine Schlageinrichtung 50 aufweisen, wie beispielhaft in Fig. 3 gezeigt ist.

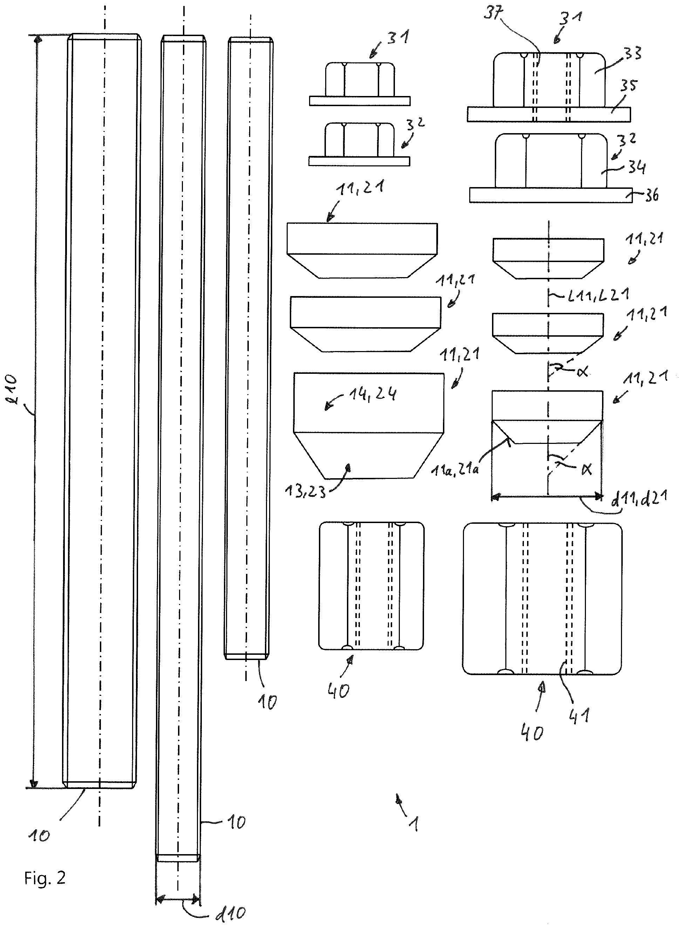

Wie beispielhaft in Fig. 2 gezeigt ist, kann das Werkzeug 1 nach dem Baukastenprinzip als Werkzeugsatz vorliegen, welcher eine Auswahl an sich unterscheidenden Spindeln 10, an sich unterscheidenden Hülsenkörpern 11, 21 und/oder an sich unterscheidenden Druckkörpern 31, 32 aufweist. Gegebenenfalls kann der Werkzeugsatz weiterhin auch eine Auswahl an sich unterscheidenden Kopplungselementen 40 und/oder an sich unterscheidenden Schlageinrichtungen 50 aufweisen.

Die Spindel 10 ist als eine längliche Welle oder Schiene mit einer eine axiale Richtung definierenden Spindellängsachse L10 ausgeführt. Wie schematisch in den Fig. 1 und 2 gezeigt ist, kann die Spindel 10 insbesondere ein Außengewinde 17 aufweisen. In dem Werkzeugsatz können insbesondere mehrere Spindeln verschiedener Länge l10 oder mit verschiedenen Außendurchmessern d10 vorgesehen sein. Beispielsweise kann eine Spindel 10 mit einer Länge l10 von 25 cm, eine Spindel 10 mit einer Länge l10 von 35 cm und eine Spindel 10 mit einer Länge l10 von 20 cm vorgesehen sein. Generell kann die Länge l10 der Spindel 10 insbesondere in einem Bereich zwischen 120 cm und 10 cm liegen. Zusätzlich oder alternativ zu den sich unterscheidenden Längen l10, können in dem Werkzeugsatz können auch mehrere Spindeln 10 mit verschiedenen Außendurchmessern d10 vorgesehen sein. Beispielsweise kann eine der Spindeln 10 ein metrisches ISO-Gewinde des Durchmessers M10, eine weitere Spindel 10 ein metrisches ISO-Gewinde des Durchmessers M16 und eine weiter Spindel 10 ein metrisches ISO-Gewinde des Durchmessers M18 aufweisen. Selbstverständlich können auch Spindeln 10 mit sich unterscheidenden Gewindetypen, insbesondere Trapezgewinden, Whitworth-Gewinden, Rundgewinden, Sägegewinden oder dergleichen vorgesehen sein. Generell kann der Außendurchmesser d10 der Spindel 10 in einem Bereich zwischen 5 mm und 50 mm liegen.

Der erste Hülsenkörper 11 weist eine erste rampenförmige Außenumfangsfläche 11a und einer Durchgangsbohrung 12 auf. Die Spindel 10 ist durch die Durchgangsbohrung 12 axial hindurchführbar. In dem zusammengesetzten Zustand des Werkzeugs 1, welcher insbesondere zum Ein- oder Ausziehen des Bauteils 2 hergestellt wird, ist die Spindel 10 axial durch die Durchgangsbohrung 12 des ersten Hülsenkörpers 11 hindurchgeführt, wie dies beispielhaft in Fig. 1 gezeigt ist.

Der zweite Hülsenkörper 12 weist eine zweite rampenförmige Außenumfangsfläche 21a und einer Durchgangsbohrung 22 auf. Die Spindel 10 ist durch die Durchgangsbohrung 22 des zweiten Hülsenkörpers 21 axial hindurchführbar. In dem zusammengesetzten Zustand des Werkzeugs 1 ist die Spindel 10 axial durch die Durchgangsbohrung 22 des zweiten Hülsenkörpers 21 hindurchgeführt, wie dies beispielhaft in Fig. 1 gezeigt ist.

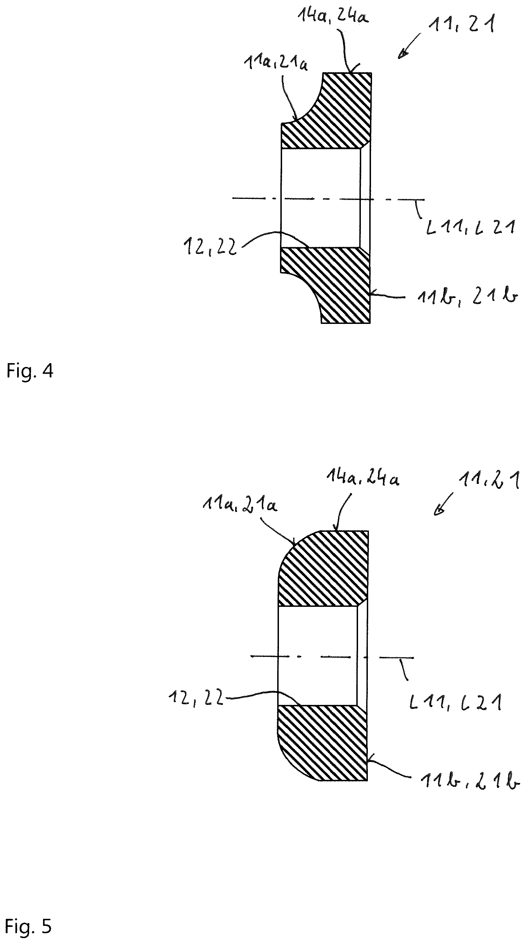

Wie in Fig. 1 gezeigt ist, sind die erste und die zweite Außenumfangsfläche 11a, 21a der Hülsenkörper 11, 21 bevorzugt konisch ausgebildet. Wie beispielhaft in Fig. 4 gezeigt ist, kann die Außenumfangsfläche 11a, 21a des ersten und/oder des zweiten Hülsenkörpers 11, 21 auch mit einer konkaven Krümmung ausgebildet sein. Fig. 5 zeigt weiterhin, dass auch eine konvex gekrümmte Gestaltung der Außenumfangsfläche 11a, 21a des ersten und/oder des zweiten Hülsenkörpers 11, 21 vorgesehen sein kann.

Nachfolgend wird der Einfachheit halber lediglich auf eine konische Gestaltung der Außenumfangsfläche 11a, 21a der Hülsenkörper 11, 21 Bezug genommen. Soweit nichts anderes angegeben ist, gelten die Ausführungen in analoger Weise auch für eine generell rampenförmige Gestaltung, insbesondere eine konvex oder konkav gekrümmte Gestaltung der Außenumfangsfläche 11a, 21a des jeweiligen Hülsenkörpers 11, 21.

Der zweite Hülsenkörper 21 ist derart vorsehbar, dass die zweite konische Außenumfangsfläche 21a der ersten konischen Außenumfangsfläche 11a zugewandt gelegen ist. Insbesondere in dem zusammengesetzten Zustand des Werkzeugs sind der erste Hülsenkörper 11 und der zweite Hülsenkörper 21 derart auf die Spindel 10 aufgeschoben, dass die erste Außenumfangsfläche 11a und die zweite Außenumfangsfläche 21a einander zugewandt orientiert sind, wie in Fig. 1 gezeigt ist.

Wie in Fig. 2 schematisch gezeigt ist, erstrecken sich die konischen Außenumfangsflächen 11a, 21a jeweils als eine Rotationsfläche um eine Hülsenmittelachse L11, L21 und schließen mit dieser jeweils einen Konuswinkel α ein. Wie in Fig. 2 weiterhin schematisch gezeigt ist, können die Hülsenkörper 11, 21 jeweils einen Konusbereich 13, 23, also generell einen axial zulaufenden Rampenbereich, und einen sich axial an diesen anschließenden Zylinderbereich 14, 24 aufweisen. Die Zylinderbereiche 14, 24 weisen jeweils eine sich zylindrisch um die Hülsenmittelachse L11, L21 erstreckende Außenumfangsfläche 14a, 24a auf.

Der erste Hülsenkörper 11 kann eine in Bezug auf die erste Hülsenmittelachse L11 entgegengesetzt zu der ersten konischen Außenumfangsfläche 11a gelegene erste Stirnfläche 11b auf, welche zur Anlage des ersten Druckkörpers 31 vorgesehen ist. Der zweite Hülsenkörper 21 kann eine in Bezug auf die zweite Hülsenmittelachse L21 entgegengesetzt zu der zweiten konischen Außenumfangsfläche 21a gelegene zweite Stirnfläche 21b auf, welche zur Anlage des zweiten Druckkörpers 32 vorgesehen ist. Im zusammengengesetzten Zustand des Werkzeugs 1 sind die Druckkörper 31, 32 jeweils an den Stirnflächen 11b, 21b kontaktierbar und liegen zur Druckbeaufschlagung jeweils an diesen an, wie beispielhaft in Fig. 1 gezeigt ist.

Die Durchgangsbohrungen 12, 22 der Hülsenkörper 11, 21 können jeweils als zylindrische Bohrungen ausgeführt sein. Wie beispielhaft in Fig. 1 gezeigt ist, kann insbesondere vorgesehen sein, dass die Durchgangsbohrungen 12, 22 jeweils einen zylindrischen Abschnitt 15, 25 und einen sich axial an diesen anschließenden, den Innendurchmesser der jeweiligen Durchgangsbohrung 12, 22 erweiternden konischen Abschnitt 16, 26 aufweist.

Wie in Fig. 2 beispielhaft gezeigt ist, kann der Werkzeugsatz kann ein Auswahl verschiedener Hülsenkörper 11, 21 umfassen. Insbesondere können mehrere Hülsenkörper 11, 21 mit verschiedenen Außendurchmessern d11, d21 und/oder verschiedenen Konuswinkeln α vorgesehen sein. Selbstverständlich können auch mehrere Hülsenkörper 11, 21 mit sich in ihren Durchmessern unterscheidenden Durchgangsbohrungen vorgesehen sein. Weiterhin können Hülsenkörper 11, 21 mit verschiedenen rampenförmigen Gestaltungen der Außenumfangsfläche 11a, 21a in demselben Werkzeugsatz enthalten sein.

Der erste und der zweite Druckkörper 31, 32 sind jeweils zur Druckbeaufschlagung der Hülsenkörper 11, 21 vorgesehen und können insbesondere als Druckmuttern ausgeführt sein, wie dies schematisch in den Fig. 1 und 2 gezeigt ist. Insbesondere können die Druckkörper 31, 32 jeweils hutförmig mit einem Funktionsbereich 33, 34 und einem Bund 35, 36 ausgeführt sein, wie insbesondere in Fig. 2 erkennbar ist. Der Bund 35, 36 weist einen größeren Außendurchmesser als der Funktionsbereich 33, 34 auf und ist zur Anlage an die Stirnfläche 11b, 21b des jeweiligen Hülsenkörpers vorgesehen, wie schematisch in Fig. 1 gezeigt ist. Die Druckmuttern können insbesondere ein Innengewinde 37 aufweisen, mit dem diese auf die Spindel 10 aufschraubbar sind. Der Funktionsbereich 33, 34 kann insbesondere als Sechskant ausgebildet sein, wie schematisch in Fig. 2 gezeigt ist.

Wie in Fig. 2 beispielhaft gezeigt ist, kann der Werkzeugsatz kann ein Auswahl verschiedener Druckkörper 31, 32 umfassen. Insbesondere können die Druckkörper 31, 32 verschiedene Innendurchmesser bzw. verschiedene Innengewinde aufweisen.

Wie insbesondere in Fig. 2 gezeigt ist, kann dass das Werkzeug 1 zusätzlich ein an einen Endabschnitt 10A der Spindel 10 koppelbares Kopplungselement 40 aufweisen. Das Kopplungselement 40 kann insbesondere ein Innengewinde 41 aufweisen, wie schematisch in Fig. 2 gezeigt ist, mit dem das Kopplungselement 40 an den Endabschnitt 10A der Spindel 10 lösbar koppelbar ist. In Fig. 1 ist das Kopplungselement 40 in einem an die Spindel 10 gekoppelten Zustand gezeigt. Das Innengewinde 41 ist weiterhin zur Kopplung an weitere Komponenten vorgesehen, wie beispielsweise an eine im Folgenden noch genauer beschriebene Schlageinrichtung.

Alternativ hierzu kann auch vorgesehen sein, dass das Kopplungselement 40 einstückig mit dem Endabschnitt 10A der Spindel 10 ausgebildet ist, insbesondere nicht lösbar mit dieser verbunden ist. Das Kopplungselement 40 kann auch hierbei das Innengewinde 41 aufweisen, welches in diesem Fall in einem Sackloch des Kopplungselements 40 ausgebildet ist und zur Kopplung weiterer Komponenten an die Spindel 10 dient.

Wie in Fig. 2 beispielhaft gezeigt ist, kann der Werkzeugsatz eine Auswahl an sich unterscheidenden Kopplungselementen aufweisen.

Das Werkzeug 1 kann zusätzlich eine Schlageinrichtung 50 aufweisen. Wie in Fig. 3 beispielhaft gezeigt ist, kann die Schlageinrichtung 50 ein an die Spindel 10 koppelbares Anschlagbauteil 51 und einen gegen einen Anschlagkörper 54 des Anschlagbauteils 51 bewegbaren Schlagkörper 52 aufweisen.

Der Anschlagkörper 54 kann insbesondere scheiben- oder plattenförmig ausgebildet sein, wie dies schematisch in Fig. 3 gezeigt ist. Der Anschlagkörper 54 kann entweder direkt an die Spindel 10 oder das Kopplungselement 40 koppelbar sein oder mittels eines Führungsstücks 53.

Das Führungsstück 53 kann insbesondere als ein stab- oder schienenförmiger, länglicher Körper ausgebildet sein, wie dies beispielhaft in Fig. 3 gezeigt ist. Bevorzugt weist das Führungsstück einen kreisförmigen Querschnitt auf. Es kann jedoch auch insbesondere ein rechteckfrömiger, dreieckförmiger, elliptischer oder polygonischer Querschnitt vorgesehen sein.

Das Führungsstück 53 kann insbesondere mit einem ersten Endabschnitt 53A an die Spindel 10 koppelbar sein. Hierzu kann an dem Führungsstück 53 ein Außengewinde 55 vorgesehen sein, welches zumindest im Bereich des Endabschnitts 53A des Führungsstücks 53 ausgebildet ist. Das Außengewinde 55 ist in das Innengewinde 41 des Kopplungselements 40 einschraubbar. Das Anschlagbauteil 51 kann somit insbesondere mittels des Kopplungselements 40 an die Spindel 10 koppelbar sein.

Der Anschlagkörper 54 ist bevorzugt an einem entgegengesetzt zu dem ersten Endabschnitt 53A gelegenen zweiten Endabschnitt 53B des Führungsstücks 53 angeordnet. Der Anschlagkörper 54 ist mit dem Führungsstück 53 verbindbar, beispielsweise lösbar an diesen Koppelbar, z.B. mittels eines Gewindes (nicht gezeigt), oder ist mit dem Führungsstück 53 verbunden, beispielsweise einstückig mit diesem ausgebildet oder mit diesem verschweißt oder dergleichen.

Die Schlageinrichtung 50 kann weiterhin einen Schlagkörper 52 aufweisen. Dieser kann insbesondere an dem Führungsstück 53 geführt bewegbar sein, wie dies in Fig. 3 schematisch gezeigt und durch den Pfeil P angedeutet ist.

Der Schlagkörper 52 kann insbesondere als ein zylindrisches Bauteil mit einer Innenbohrung 56 ausgebildet sein, durch welche das Führungsstück 53 hindurchführbar ist, wie in Fig. 3 schematisch gezeigt.

In dem Werkzeugsatz kann selbstverständlich auch eine Auswahl an sich unterscheidenden Schlageinrichtungen vorgesehen sein, z.B. mit sich unterscheidenden Führungsstücken 53 und/oder mit sich unterscheidenden Schlagkörpern 52 und/oder mit sich unterscheidenden Anschlagstücken 54.

Im Folgenden wird ein Verfahren zum Ein- oder Ausziehen des Bauteils 2, in die Bauteilaufnahme 3 hinein oder aus dieser heraus beispielhaft anhand der Fig. 1 und unter Bezugnahme auf das oben beschriebene Werkzeug beschrieben.

Bei dem Verfahren erfolgt ein in Kontakt bringen der ersten rampenförmigen, insbesondere konischen Außenumfangsfläche 11a des ersten Hülsenkörpers 11 mit einem ersten Endbereich 5A einer eine Innenbohrung 4 definierenden Wandung 5 des Bauteils 2. Weiterhin erfolgt ein in Kontakt bringen der zweiten rampenförmigen, insbesondere konischen Außenumfangsfläche 21a des zweiten Hülsenkörpers 21 mit einem entgegengesetzt zu dem ersten Endbereich 5A gelegenen zweiten Endbereich 5B der Wandung 5 des Bauteils 2. Dementsprechend ist das Bauteil 2 axial zwischen dem ersten und dem zweiten Hülsenkörper 11, 21 bzw. diese sind auf entgegengesetzten Seiten des Bauteils 2 angeordnet, wie in Fig. 1 beispielhaft gezeigt ist.

Wie in Fig. 1 weiterhin gezeigt ist, erstrecken sich die Hülsenkörper 11, 21 teilweise axial in die Innenbohrung 4 des Bauteils 2 hinein. Dadurch erfolgt aufgrund der Rotationssymmetrie der Außenumfangsflächen 11a, 21a bezüglich der jeweiligen Hülsenmittelachse L11, L21 automatisch eine Zentrierung der Hülsenkörper 11, 21 bezüglich der Innenbohrung 4 des Bauteils 2.
Die Spindel 10 erstreckt sich durch die Durchgangsbohrung 12 des ersten Hülsenkörpers 11, durch die Innenbohrung 4 des Bauteils 2 sowie durch die Durchgangsbohrung 22 des zweiten Hülsenkörpers 21 axial hindurch.

Weiterhin erfolgt ein axiales Beaufschlagen des ersten Hülsenkörpers 11 mit einer Kraft in Richtung des zweiten Hülsenkörpers 21 mittels des ersten Druckkörpers 31 und ein axiales Beaufschlagen des zweiten Hülsenkörpers 21 mit einer Kraft in Richtung des ersten Hülsenkörpers 11 mittels des zweiten Druckkörpers 32. Beispielsweise können die Druckkörper 31, 32 von entgegengesetzten Seiten her auf die Spindel 10 aufgeschraubt werden, wodurch die Druckkörper 31, 32 in Anlage an die Stirnflächen 11b, 21b der Hülsenkörper 11, 21 gelangen und diese von entgegengesetzten Seiten her gegen das Bauteil 2 pressen. Das Bauteil 2 wird dadurch zwischen den Hülsenkörpen 11, 21 axial eingeklemmt.

Wenn das Bauteil zwischen den Hülsenkörpern eingeklemmt ist, erfolgt ein axiales Beaufschlagen der Spindel 10 mit einer Kraft F und dadurch ein Bewegen des Bauteils 2 aus der Lageraufnahme 3 heraus oder in diese hinein, wie dies in Fig. 1 schematisch durch den Pfeil Q angedeutet ist.

Bevorzugt ist vorgesehen, dass das axiale Beaufschlagen der Spindel 10 mit der Kraft F durch stoßweises Aufbringen der Kraft F infolge eines Bewegens des Schlagkörpers 52 gegen den Anschlagkörper 54 des an die Spindel 10 gekoppelten Anschlagbauteils 51 erfolgt.

### BEZUGSZEICHENLISTE

- 1: Werkzeug
- 2: Bauteil
- 3 4: Innenbohrung
- 5: Wandung
- 5A: erster Endbereich der Wandung
- 5B: zweiter Endbereich der Wandung
- 10: Spindel
- 10A: Endabschnitt der Spindel
- 11: erster Hülsenkörper
- 11a: erste konische Außenumfangsfläche
- 11b: erste Stirnfläche
- 12: Durchgangsbohrung des ersten Hülsenkörpers
- 13: Konusbereich des ersten Hülsenkörpers
- 14: Zylinderbereich des ersten Hülsenkörpers
- 15: zylindrischer Abschnitt der Durchgangsbohrung des ersten Hülsenkörpers
- 16: konischer Abschnitt der Durchgangsbohrung des ersten Hülsenkörpers
- 17: Außengewinde der Spindel
- 21: zweiter Hülsenkörper
- 21a: zweite konische Außenumfangsfläche
- 21b: zweite Stirnfläche
- 23: Konusbereich des zweiten Hülsenkörpers
- 24: Zylinderbereich des zweiten Hülsenkörpers
- 25: zylindrischer Abschnitt der Durchgangsbohrung des zweiten Hülsenkörpers
- 26: konischer Abschnitt der Durchgangsbohrung des zweiten Hülsenkörpers
- 22: Durchgangsbohrung des zweiten Hülsenkörpers
- 31: erster Druckkörper
- 32: zweiter Druckkörper
- 33: Funktionsbereich des Druckkörpers
- 34: Funktionsbereich des Druckkörpers
- 35: Bund
- 36: Bund
- 37: Innengewinde des Druckkörpers
- 40: Kopplungselement
- 50: Schlageinrichtung
- 51: Anschlagbauteil
- 52: Schlagkörper
- 53: Führungsstück
- 53A: erster Endabschnitt des Führungsstücks
- 53B: zweiter Endabschnitt des Führungsstücks
- 54: Anschlagkörper
- 55: Außengewinde des Führungsstücks
- 56: Innenbohrung des Schlagkörpers
- L10: Spindellängsachse
- L11: Hülsenmittelachse
- L21: Hülsenmittelachse
- F: Kraft
- P: Pfeil
- Q: Pfeil

## Patentansprüche

1. Werkzeug (1) zum Ein- und Ausziehen von Bauteilen (2), insbesondere Lagern, Buchsen oder dergleichen, insbesondere im Kraftfahrzeugbereich, in eine Bauteilaufnahme (3) hinein oder aus dieser heraus, mit einer Spindel (10);
einem ersten Hülsenkörper (11) mit einer ersten rampenförmigen Außenumfangsfläche (11a) zur spielfreien und zentrierten Anlage an das Bauteil (2) und einer Durchgangsbohrung (12), durch welche die Spindel (10) axial hindurchführbar ist;
einem zweiten Hülsenkörper (21) mit einer zweiten rampenförmigen Außenumfangsfläche (21a) zur spielfreien und zentrierten Anlage an das Bauteil (2) und einer Durchgangsbohrung (22), durch welche die Spindel (10) axial hindurchführbar ist, wobei der zweite Hülsenkörper (21) derart vorsehbar ist, dass die zweite rampenförmige Außenumfangsfläche (21a) der ersten rampenförmigen Außenumfangsfläche (11a) zugewandt gelegen ist;
einem mit dem ersten Hülsenkörper (11) zur axialen Druckbeaufschlagung desselben koppelbaren ersten Druckkörper (31); und
einem mit dem zweiten Hülsenkörper (21) zur axialen Druckbeaufschlagung desselben koppelbaren zweiten Druckkörper (32);und
einer Schlageinrichtung (50) mit einem an die Spindel (10) koppelbaren Anschlagbauteil (51) und einem gegen einen Anschlagkörper (54) des Anschlagbauteils (51) bewegbaren Schlagkörper (52) zum axialen Beaufschlagen der Spindel mit einer Kraft (F);
wobei die Außenumfangsflächen (11a; 21a) der Hülsenkörper (11; 21) sich jeweils entlang einer jeweiligen Hülsenmittelachse (L11; L21) des jeweiligen Hülsenkörpers (11; 21) derart verjüngen, dass sie von entgegengesetzten Seiten her teilweise in eine Innenbohrung (4) des Bauteils (2) einführbar sind.

2. Werkzeug nach Anspruch 1, **dadurch gekennzeichnet, dass** die erste rampenförmige Außenumfangsfläche (11a) und/oder die zweite rampenförmige Außenumfangsfläche (21a) konisch ausgebildet ist.

3. Werkzeug nach Anspruch 1 oder 2, **dadurch gekennzeichnet, dass** die erste rampenförmige Außenumfangsfläche (11a) und/oder die zweite rampenförmige Außenumfangsfläche (21a) mit einer konvexen Krümmung ausgebildet ist.

4. Werkzeug nach einem der voranstehenden Ansprüche, **dadurch gekennzeichnet, dass** die erste rampenförmige Außenumfangsfläche (11a) und/oder die zweite rampenförmige Außenumfangsfläche (21a) mit einer konkaven Krümmung ausgebildet ist.

5. Werkzeug nach einem der voranstehenden Ansprüche, **dadurch gekennzeichnet, dass** die Spindel (10) ein Außengewinde aufweist.

6. Werkzeug nach einem der voranstehenden Ansprüche, **dadurch gekennzeichnet, dass** die Druckkörper (31; 32) als Druckmuttern ausgeführt sind.

7. Werkzeug nach einem der voranstehenden Ansprüche, **dadurch gekennzeichnet, dass** das Werkzeug (1) zusätzlich ein an einen Endabschnitt (10A) der Spindel (10) koppelbares Kopplungselement (40) aufweist.

8. Werkzeug nach einem der Ansprüche 1 bis 6, **dadurch gekennzeichnet, dass** die Spindel (10) ein an einem Endabschnitt (10A) einstückig mit diesem ausgebildetes Kopplungselement (40) aufweist.

9. Werkzeug nach einem der voranstehenden Ansprüche, **dadurch gekennzeichnet, dass** das Anschlagbauteil (51) ein Führungsstück (53) aufweist, an welchem der Schlagkörper (52) geführt bewegbar ist, und der Anschlagkörper (54) mit dem Führungsstück (53) verbindbar oder verbunden ist.

10. Werkzeug nach einem der Ansprüche 7 bis 9, **dadurch gekennzeichnet, dass** das Anschlagbauteil (51) mittels des Kopplungselements (40) an die Spindel (10) koppelbar ist.

11. Werkzeug nach einem der voranstehenden Ansprüche, **dadurch gekennzeichnet, dass** das Werkzeug (1) nach dem Baukastenprinzip eine Auswahl an sich unterscheidenden Spindeln (10), an sich unterscheidenden Hülsenkörpern (11; 21) und/oder an sich unterscheidenden Druckkörpern (31; 32) aufweist.

12. Verfahren zum Ein- oder Ausziehen von Bauteilen (2), insbesondere Lagern, Buchsen oder dergleichen, insbesondere im Kraftfahrzeugbereich, in eine Bauteilaufnahme (3) hinein oder aus dieser heraus, mit den Schritten:
in Kontakt Bringen einer ersten rampenförmigen Außenumfangsfläche (11a) eines ersten Hülsenkörpers (11) mit einem ersten Endbereich (5A) einer eine Innenbohrung (4) definierenden Wandung (5) des Bauteils (2), wobei die erste rampenförmige Außenumfangsfläche (11a) teilweise in die Innenbohrung (4) des Bauteils (2) eingeführt wird;
in Kontakt Bringen einer zweiten rampenförmigen Außenumfangsfläche (21a) eines zweiten Hülsenkörpers (21) mit einem entgegengesetzt zu dem ersten Endbereich (5A) gelegenen zweiten Endbereich (5B) der die Innenbohrung (4) definierenden Wandung (5) des Bauteils (2), wobei die zweite rampenförmige Außenumfangsfläche (21a) teilweise in die Innenbohrung (4) des Bauteils (2) eingeführt wird, und wobei eine Spindel (10) durch eine Durchgangsbohrung (12) des ersten Hülsenkörpers (11), durch die Innenbohrung (4) des Bauteils (2) sowie durch eine Durchgangsbohrung (22) des zweiten Hülsenkörpers (21) axial hindurchgeführt ist;
axiales Beaufschlagen des ersten Hülsenkörper (11) mit einer Kraft in Richtung des zweiten Hülsenkörpers (21) mittels eines ersten Druckkörpers (31);
axiales Beaufschlagen des zweiten Hülsenkörpers (21) mit einer Kraft in Richtung des ersten Hülsenkörpers (11) mittels eines zweiten Druckkörpers (32); und
stoßweises axiales Beaufschlagen der Spindel (10) mit einer Kraft (F) durch Bewegen eines Schlagkörpers (52) gegen einen Anschlagkörper (54) eines an die Spindel (10) gekoppelten Anschlagbauteils (51) und dadurch Bewegen des Bauteils (2) aus der Lageraufnahme (3) heraus oder in diese hinein.

## Claims

1. Tool (1) for inserting and extracting components (2), in particular bearings, bushes or the like, in particular in the motor vehicle industry, into a component receiving arrangement (3) or out of said component receiving arrangement, said tool having
a spindle (10);
a first sleeve body (11) having a first ramp-shaped outer peripheral surface (11a) for the play-free and centred installation on the component (2) and a throughgoing hole (12) through which the spindle (10) can be guided in an axial manner;
a second sleeve body (21) having a second ramp-shaped outer peripheral surface (21a) for the play-free and centred installation on the component (2) and a throughgoing hole (22) through which the spindle (10) can be guided in an axial manner, wherein the second sleeve body (21) can be provided in such a manner that the second ramp-shaped outer peripheral surface (21a) is located facing the first ramp-shaped outer peripheral surface (11a) ;
a first pressure-exerting body (31) that can be coupled to the first sleeve body (11) in order to influence said first sleeve body with pressure in an axial manner; and
a second pressure-exerting body (32) that can be coupled to the second sleeve body (21) in order to influence said second sleeve body with pressure in an axial manner; and an impacting device (50) having a stop component (51) that can be coupled to the spindle (10) and an impacting body (52) that can move against a stop body (54) of the stop component (51) so as to influence the spindle with a force (F) in an axial manner;
wherein the outer peripheral surfaces (11a; 21a) of the sleeve bodies (11; 21) taper in each case along a respective sleeve centre axis (L11; L21) of the respective sleeve body (11; 21) in such a manner that said outer peripheral surfaces can be inserted from opposing sides in part into an inner hole (4) of the component (2).

2. Tool according to claim 1, **characterised in that** the first ramp-shaped outer peripheral surface (11a) and/or the second ramp-shaped outer peripheral surface (21a) is embodied as conical.

3. Tool according to claim 1 or 2, **characterised in that** the first ramp-shaped outer peripheral surface (11a) and/or the second ramp-shaped outer peripheral surface (21a) is embodied with a convex curvature.

4. Tool according to one of the preceding claims, **characterised in that** the first ramp-shaped outer peripheral surface (11a) and/or the second ramp-shaped outer peripheral surface (21a) is embodied with a concave curvature.

5. Tool according to one of the preceding claims, **characterised in that** the spindle (10) comprises an outer thread.

6. Tool according to one of the preceding claims, **characterised in that** the pressure-exerting bodies (31; 32) are embodied as pressure-exerting nuts.

7. Tool according to one of the preceding claims, **characterised in that** the tool (1) additionally comprises a coupling element (40) that can be coupled to an end section (10A) of the spindle (10).

8. Tool according to one of claims 1 to 6, **characterised in that** the spindle (10) comprises a coupling element (40) that is embodied on an end section (10A) as one piece with said end section.

9. Tool according to one of the preceding claims, **characterised in that** the stop component (51) comprises a guiding piece (53) and the impacting body (52) is guided in a movable manner on said guiding piece and the stop body (54) can be connected or is connected to the guiding piece (53).

10. Tool according to one of claims 7 to 9, **characterised in that** the stop component (51) can be coupled by means of the coupling element (40) to the spindle (10).

11. Tool according to one of the preceding claims, **characterised in that** the tool (1) according to the modular principle comprises a selection of different spindles (10), different sleeve bodies (11; 21) and/or different pressure-exerting bodies (31; 32).

12. Method for inserting or extracting components (2), in particular bearings, bushes or the like, in particular in the motor vehicle industry, into a component receiving arrangement (3) or out of said component receiving arrangement, said method having the steps:
bringing a first ramp-shaped outer peripheral surface (11a) of a first sleeve body (11) into contact with a first end region (5A) of a wall (5) of the component (2), and said wall defines an inner hole (4), wherein the first ramp-shaped outer peripheral surface (11a) is in part inserted into the inner hole (4) of the component (2) ;
bringing a second ramp-shaped outer peripheral surface (21a) of a second sleeve body (21) into contact with a second end region (5B), which is located opposite the first end region (5A), of the wall (5) of the component (2) and said wall defines the inner hole (4), wherein the second ramp-shaped outer peripheral surface (21a) is in part inserted into the inner hole (4) of the component (2), and wherein a spindle (10) is guided in an axial manner through a throughgoing hole (12) of the first sleeve body (11), through the inner hole (4) of the component (2) and also through a throughgoing hole (22) of the second sleeve body (21);
influencing the first sleeve body (11) with a force in an axial manner in the direction of the second sleeve body (21) by means of a first pressure-exerting body (31);
influencing the second sleeve body (21) with a force in an axial manner in the direction of the first sleeve body (11) by means of a second pressure-exerting body (32); and
intermittently influencing the spindle (10) with a force (F) in an axial manner by means of moving an impacting body (52) against a stop body (54) of a stop component (51) that is coupled to the spindle (10) and consequently moving the component (2) out of the bearing receiving arrangement (3) or into said bearing receiving arrangement.

## Revendications

1. Outil (1) pour insérer et extraire des composants (2), en particulier des paliers, des bagues ou analogues, en particulier dans le domaine automobile, dans un logement de composant (3) ou hors de celui-ci, comprenant :
une broche (10) ;
un premier corps de douille (11) avec une première surface périphérique extérieure (11a) en forme de rampe pour l'appui sans jeu et centré sur le composant (2) et un alésage traversant (12) à travers lequel la broche (10) peut être passée axialement ;
un deuxième corps de douille (21) avec une deuxième surface périphérique extérieure en forme de rampe (21a) pour l'appui sans jeu et centré sur le composant (2) et un alésage traversant (22) à travers lequel la broche (10) peut être passée axialement, le deuxième corps de douille (21) pouvant être prévu de telle sorte que la deuxième surface périphérique extérieure en forme de rampe (21a) soit tournée vers la première surface périphérique extérieure en forme de rampe (11a) ;
un premier corps de pression (31) pouvant être accouplé au premier corps de douille (11) pour exercer une pression axiale sur celui-ci ; et
un deuxième corps de pression (32) pouvant être accouplé au deuxième corps de douille (21) pour exercer une pression axiale sur celui-ci ; et
un dispositif de frappe (50) avec un composant de butée (51) pouvant être accouplé à la broche (10) et un corps de frappe (52) pouvant être déplacé contre un corps de butée (54) du composant de butée (51) pour appliquer axialement une force (F) à la broche ;
dans lequel les surfaces périphériques extérieures (11a ; 21a) des corps de douille (11 ; 21) s'effilent chacune le long d'un axe central de douille respectif (L11 ; L21) du corps de douille respectif (11 ; 21) de telle sorte qu'elles peuvent être partiellement introduites dans un alésage intérieur (4) du composant (2) depuis des côtés opposés.

2. Outil selon la revendication 1, **caractérisé en ce que** la première surface périphérique extérieure en forme de rampe (11a) et/ou la deuxième surface périphérique extérieure en forme de rampe (21a) sont formées en cône.

3. Outil selon la revendication 1 ou 2, **caractérisé en ce que** la première surface périphérique extérieure en forme de rampe (11a) et/ou la deuxième surface périphérique extérieure en forme de rampe (21a) sont formées avec une courbure convexe.

4. Outil selon l'une des revendications précédentes, **caractérisé en ce que** la première surface périphérique extérieure en forme de rampe (11a) et/ou la deuxième surface périphérique extérieure en forme de rampe (21a) sont formées avec une courbure concave.

5. Outil selon l'une des revendications précédentes, **caractérisé en ce que** la broche (10) présente un filetage extérieur.

6. Outil selon l'une des revendications précédentes, **caractérisé en ce que** les corps de pression (31 ; 32) sont réalisés sous la forme d'écrous de pression.

7. Outil selon l'une des revendications précédentes, **caractérisé en ce que** l'outil (1) présente en outre un élément d'accouplement (40) pouvant être accouplé à une partie d'extrémité (10A) de la broche (10).

8. Outil selon l'une des revendications 1 à 6, **caractérisé en ce que** la broche (10) présente un élément d'accouplement (40) formé d'une seule pièce avec une partie d'extrémité (10A) de celle-ci.

9. Outil selon l'une des revendications précédentes, **caractérisé en ce que** le composant de butée (51) présente une pièce de guidage (53) sur laquelle le corps de frappe (52) est mobile de manière guidée et le corps de butée (54) peut être relié ou est relié à la pièce de guidage (53) .

10. Outil selon l'une des revendications 7 à 9, **caractérisé en ce que** le composant de butée (51) peut être accouplé à la broche (10) au moyen de l'élément d'accouplement (40).

11. Outil selon l'une des revendications précédentes, **caractérisé en ce que** l'outil (1) présente, selon le principe modulaire, une sélection de broches (10) différentes, de corps de douille (11 ; 21) différents et/ou de corps de pression (31 ; 32) différents.

12. Procédé pour insérer ou extraire des composants (2), en particulier des paliers, des bagues ou analogues, en particulier dans le domaine automobile, dans un logement de composant (3) ou hors de celui-ci, comprenant les étapes consistant à :
mettre en contact une première surface périphérique extérieure en forme de rampe (11a) d'un premier corps de douille (11) avec une première zone d'extrémité (5A) d'une paroi (5) du composant (2) définissant un alésage intérieur (4), la première surface périphérique extérieure en forme de rampe (11a) étant partiellement introduite dans l'alésage intérieur (4) du composant (2) ;
mettre en contact une deuxième surface périphérique extérieure en forme de rampe (21a) d'un deuxième corps de douille (21) avec une deuxième zone d'extrémité (5B), située à l'opposé de la première zone d'extrémité (5A), de la paroi (5) du composant (2) définissant l'alésage intérieur (4), la deuxième surface périphérique extérieure en forme de rampe (21a) étant partiellement introduite dans l'alésage intérieur (4) du composant (2), et une broche (10) étant passée axialement à travers un alésage traversant (12) du premier corps de douille (11), à travers l'alésage intérieur (4) du composant (2) ainsi qu'à travers un alésage traversant (22) du deuxième corps de douille (21) ;
appliquer axialement au premier corps de douille (11) une force en direction du deuxième corps de douille (21) au moyen d'un premier corps de pression (31) ;
appliquer axialement au deuxième corps de douille (21) une force en direction du premier corps de douille (11) au moyen d'un deuxième corps de pression (32) ; et
appliquer axialement par à-coups une force (F) à la broche (10) en déplaçant un corps de frappe (52) contre un corps de butée (54) d'un composant de butée (51) accouplé à la broche (10) et ainsi faire sortir le composant (2) du logement de palier ou le faire entrer dans celui-ci.
